# EUROPEAN PATENT APPLICATION

(11) **EP 4 791 066 A1**
(43) Date of publication of application: **12.08.2026**
(21) Application number: 23955733.3
(22) Date of filing: 19.10.2023
(51) Int. Cl.: H04W 24/08

(54) **INFORMATION TRANSMISSION METHOD, COMMUNICATION APPARATUS, AND SYSTEM**

(71) Applicant: HUAWEI TECHNOLOGIES CO., LTD., Shenzhen, Guangdong 518129 (CN)
(72) Inventor: YU, Yang, Shenzhen, Guangdong 518129 (CN); LUO, Jiajin, Shenzhen, Guangdong 518129 (CN)
(74) Representative: Maiwald GmbH
(86) International application number: PCT/CN2023/125374
(87) International publication number: WO 2025/081406

(57) **Abstract**

This application provides an information transmission method, and a communication apparatus and system, and relates to the field of sensing technologies. In the method, the apparatus may classify data based on scattering characteristic information that is included in the data and that is obtained by sensing a target at a corresponding measurement angle, for example, distinguish data that satisfies a coherent relation from data that satisfies a non-coherent relation in at least two pieces of data obtained by sensing the target, and perform coherent processing on the data that satisfies the coherent relation, and perform non-coherent processing on the data that satisfies the non-coherent relation, so that proper processing on data obtained in a large aperture observation scenario can be supported in this application.

## Description

### TECHNICAL FIELD

This application relates to the field of sensing technologies, and more specifically, to an information transmission method, and a communication apparatus and system.

### BACKGROUND

In recent years, with the continuous development of communication technologies and wireless sensing technologies, integration of the communication technologies and the wireless sensing technologies has become a hot research direction. In an integrated communication and sensing system, a device such as a network device or a terminal device in the communication system not only supports a communication function, but also has a wireless sensing capability.

In the integrated communication and sensing system, there are two types of observation scenarios: small aperture observation and large aperture observation. For the small aperture observation scenario, data obtained from a target is coherently processed under an assumption that the target is approximated as an isotropic scattering target. However, for the large aperture observation scenario, the assumption that the target is approximated as an isotropic scattering target no longer holds. Therefore, how to process the data obtained from the target in the large aperture observation scenario is a technical problem to be urgently resolved currently.

### SUMMARY

This application provides an information transmission method, and a communication apparatus and system, to support proper processing on data obtained in a large aperture observation scenario.

According to a first aspect, an information transmission method is provided, including: obtaining at least two pieces of data, where each of the at least two pieces of data includes scattering characteristic information obtained by sensing a target at a corresponding measurement angle; and sending indication information, where the indication information indicates at least one of data that satisfies a coherent relation and data that satisfies a non-coherent relation in the at least two pieces of data, and the indication information is determined based on the scattering characteristic information included in each piece of data.

An execution body of the solution in the first aspect may be a first apparatus, or may be a module (such as a chip system) of the first apparatus, or may be a logical node, a logical module, or software that can implement all or some functions of the first apparatus. This is not limited. For ease of description, the following uses the first apparatus as an example for description. The first apparatus may be a network device, or may be a terminal device. This is not limited.

It should be noted that the apparatus in this embodiment of this application may be a communication device, a device, a component in a device, a chip system, or the like. This is not limited. For example, the first apparatus may be a first device, a first component, a first chip system, or the like.

The first apparatus may classify the data based on the scattering characteristic information included in the data. For example, the first apparatus classifies the at least two pieces of data into at least two types based on the scattering characteristic information included in each of the at least two pieces of data, for example, the data that satisfies the coherent relation and the data that satisfies the non-coherent relation. The first apparatus may indicate, to the second apparatus, types of different data in the at least two pieces of data or relationships that the different data in the at least two pieces of data meets. Further, the second apparatus may perform corresponding data processing on the different types of data. For example, the second apparatus performs coherent processing on the data that satisfies the coherent relation, and the second apparatus performs non-coherent processing on the data that satisfies the non-coherent relation.

Compared with an existing solution in which the at least two pieces of data are processed in a same data processing manner (for example, coherent processing or non-coherent processing), the foregoing solution may bring both a resolution gain (coherent processing is performed on the data that satisfies the coherent relation) and a precision gain (non-coherent processing is performed on the data that satisfies the non-coherent relation).

In conclusion, based on the foregoing technical solution, this application can support proper processing on data obtained in a large aperture observation scenario. For example, coherent processing is performed on the data that satisfies the coherent relation, so that the resolution gain can be brought, and non-coherent processing is performed on the data that satisfies the non-coherent relation, so that the precision gain can be brought. In this way, both the resolution gain and the precision gain can be brought.

In other words, the first apparatus may classify the data based on the scattering characteristic information that is included in the data and that is obtained by sensing the target at corresponding measurement angles. For example, the first apparatus distinguishes the data that satisfies the coherent relation from the data that satisfies the non-coherent relation in the at least two pieces of data obtained by sensing the target, and the second apparatus performs coherent processing on the data that satisfies the coherent relation, and performs non-coherent processing on the data that satisfies the non-coherent relation, so that proper processing on the data obtained in the large aperture observation scenario can be supported.

It should be noted that the precision may be understood as a degree of difference between a measurement result and a real value, and is usually represented by an error. The resolution may be understood as a minimum value that can be used for distinction.

According to a second aspect, an information transmission method is provided, including: receiving indication information, where the indication information indicates at least one of data that satisfies a coherent relation and data that satisfies a non-coherent relation in at least two pieces of data, each of the at least two pieces of data includes scattering characteristic information obtained by sensing a target at a corresponding measurement angle, and the indication information is determined based on the scattering characteristic information included in each piece of data; and processing the at least two pieces of data based on the indication information.

An execution body of the solution in the second aspect may be a first apparatus, or may be a module (such as a chip system) of the second apparatus, or may be a logical node, a logical module, or software that can implement all or some functions of the second apparatus. This is not limited. For ease of description, the following uses the second apparatus as an example for description. The second apparatus may be a network device, or may be a terminal device. This is not limited.

In the foregoing solution, the first apparatus indicates, to the second apparatus, types of different data in the at least two pieces of data or relationships that the different data in the at least two pieces of data meets. The second apparatus may perform corresponding data processing on the different types of data. For example, the second apparatus performs coherent processing on the data that satisfies the coherent relation, and the second apparatus performs non-coherent processing on the data that satisfies the non-coherent relation.

Compared with an existing solution in which the at least two pieces of data are processed in a same data processing manner (for example, coherent processing or non-coherent processing), the foregoing solution may bring both a resolution gain (coherent processing is performed on the data that satisfies the coherent relation) and a precision gain (non-coherent processing is performed on the data that satisfies the non-coherent relation).

In conclusion, based on the foregoing technical solution, this application can support proper processing on data obtained in a large aperture observation scenario. For example, coherent processing is performed on the data that satisfies the coherent relation, so that the precision gain can be brought, and non-coherent processing is performed on the data that satisfies the non-coherent relation, so that the resolution gain can be brought. In this way, both the resolution gain and the precision gain can be brought.

With reference to the second aspect, in a possible implementation, the method further includes: sending at least one piece of data, where the at least one piece of data belongs to the at least two pieces of data.

In this way, the second apparatus may send the data obtained by the second apparatus to the first apparatus.

In the solution according to any one of the first aspect and the second aspect, the indication information includes at least one angle range, the at least one angle range includes a first angle range, and data corresponding to measurement angles within the first angle range satisfies the coherent relation.

Specifically, there is an association relationship between an angle within each angle range and data, and at least one of the data that satisfies the coherent relation and the data that satisfies the non-coherent relation in the at least two pieces of data may be indicated by using different angle ranges. This can reduce signaling indication overheads.

In addition, the second apparatus may perform coherent processing (for example, coherent accumulation) on the data corresponding to the angles within the first angle range, to achieve a resolution gain.

In the solution according to any one of the first aspect and the second aspect, the at least one angle range further includes a second angle range, and data corresponding to measurement angles within the second angle range satisfies the non-coherent relation.

In this way, the second apparatus may no longer perform coherent processing on the data corresponding to the angles within the second angle range, to avoid interference to other data, but perform non-coherent processing (for example, non-coherent accumulation), to increase a signal-to-noise ratio, thereby achieving a precision gain.

In the solution according to any one of the first aspect and the second aspect, the data corresponding to the first angle range and the data corresponding to the second angle range satisfy the non-coherent relation.

In this way, coherent processing is no longer performed on the data corresponding to the angles within the first angle range and the data corresponding to the angles within the second angle range, to avoid interference of the data corresponding to the angles within the second angle range to the data corresponding to the angles within the first angle range.

In the solution according to any one of the first aspect and the second aspect, the scattering characteristic information includes at least one of the following: a radar cross section, a scattering phase, and scattering intensity.

In this way, the at least two pieces of data may be classified by using one or more of the foregoing items, so as to determine at least one of data that satisfies a coherent relation and data that satisfies a non-coherent relation in the at least two pieces of data.

In the solution according to any one of the first aspect and the second aspect, a portion of or all of the at least two pieces of data are source data obtained by sensing the target at corresponding measurement angles; or a portion of or all of the at least two pieces of data are data obtained by processing source data that is obtained by sensing the target at corresponding measurement angles.

In this way, the scattering characteristic information of the target can be obtained by processing two or more pieces of source data or data (including the scattering characteristic information of the target) obtained after the source data is processed, to implement angle division, and further implement coherent processing and non-coherent processing on the at least two pieces of data separately, so that a resolution gain and a precision gain can be achieved at the same time.

In the solution according to any one of the first aspect and the second aspect, the at least one angle range is associated with the target.

The foregoing "the angle range is associated with the target" may be that: the angle range is associated with the sensed target.

By associating the angle range with the target, the first apparatus may determine at least one of the data that satisfies the coherent relation and the data that satisfies the non-coherent relation in the at least two pieces of data corresponding to the target, and the second apparatus may also properly process the at least two pieces of data corresponding to the target, so as to better complete the task of sensing the target, and avoid a mismatch between the at least one angle range and the target, thereby avoiding deterioration of sensing quality.

In the solution according to any one of the first aspect and the second aspect, the indication information further includes identification information of the target.

In this way, the second apparatus can properly process the at least two pieces of data corresponding to the target, to better complete a task of sensing the target.

In the solution according to any one of the first aspect and the second aspect, that the indication information is determined based on the scattering characteristic information included in each piece of data includes: the indication information is determined based on a derivative, with respect to the measurement angle, of the radar cross section included in each piece of data; or the indication information is determined based on a statistical characteristic, with respect to the measurement angle, of the radar cross section included in each piece of data; or the indication information is determined based on a derivative, with respect to the measurement angle, of the scattering phase included in each piece of data; or the indication information is determined based on a statistical characteristic, with respect to the measurement angle, of the scattering phase included in each piece of data; or the indication information is determined based on a derivative, with respect to the measurement angle, of the scattering intensity included in each piece of data; or the indication information is determined based on a statistical characteristic, with respect to the measurement angle, of the scattering intensity included in each piece of data.

In this way, the first apparatus can indicate at least one of the data that satisfies the coherent relation and the data that satisfies the non-coherent relation in the at least two pieces of data.

According to a third aspect, a communication apparatus is provided, including: an interface unit, configured to obtain at least two pieces of data, where each of the at least two pieces of data includes scattering characteristic information obtained by sensing a target at a corresponding measurement angle; and the interface unit is further configured to send indication information, where the indication information indicates at least one of data that satisfies a coherent relation and data that satisfies a non-coherent relation in the at least two pieces of data, and the indication information is determined based on the scattering characteristic information included in each piece of data.

According to a fourth aspect, a communication apparatus is provided, including: an interface unit, configured to receive indication information, where the indication information indicates at least one of data that satisfies a coherent relation and data that satisfies a non-coherent relation in at least two pieces of data, each of the at least two pieces of data includes scattering characteristic information obtained by sensing a target at a corresponding measurement angle, and the indication information is determined based on the scattering characteristic information included in each piece of data; and a processing unit, configured to process the at least two pieces of data based on the indication information.

With reference to the fourth aspect, in a possible implementation, the interface unit is further configured to send at least one piece of data, where the at least one piece of data belongs to the at least two pieces of data.

In the solution according to any one of the third aspect and the fourth aspect, the indication information includes at least one angle range, the at least one angle range includes a first angle range, and data corresponding to measurement angles within the first angle range satisfies the coherent relation.

In the solution according to any one of the third aspect and the fourth aspect, the at least one angle range further includes a second angle range, and data corresponding to measurement angles within the second angle range satisfies the non-coherent relation.

In the solution according to any one of the third aspect and the fourth aspect, the data corresponding to the first angle range and the data corresponding to the second angle range satisfy the non-coherent relation.

In the solution according to any one of the third aspect and the fourth aspect, the scattering characteristic information includes at least one of the following: a radar cross section, a scattering phase, and scattering intensity.

In the solution according to any one of the third aspect and the fourth aspect, a portion of or all of the at least two pieces of data are source data obtained by sensing the target at corresponding measurement angles; or a portion of or all of the at least two pieces of data are data obtained by processing source data that is obtained by sensing the target at corresponding measurement angles.

In the solution according to any one of the third aspect and the fourth aspect, the at least one angle range is associated with the target.

In the solution according to any one of the third aspect and the fourth aspect, the indication information further includes identification information of the target.

In the solution according to any one of the third aspect and the fourth aspect, that the indication information is determined based on the scattering characteristic information included in each piece of data includes: the indication information is determined based on a derivative, with respect to the measurement angle, of the radar cross section included in each piece of data; or the indication information is determined based on a statistical characteristic, with respect to the measurement angle, of the radar cross section included in each piece of data; or the indication information is determined based on a derivative, with respect to the measurement angle, of the scattering phase included in each piece of data; or the indication information is determined based on a statistical characteristic, with respect to the measurement angle, of the scattering phase included in each piece of data; or the indication information is determined based on a derivative, with respect to the measurement angle, of the scattering intensity included in each piece of data; or the indication information is determined based on a statistical characteristic, with respect to the measurement angle, of the scattering intensity included in each piece of data.

According to a fifth aspect, an embodiment of this application provides a communication apparatus, including modules configured to perform the method in all possible implementations of the first aspect or the second aspect.

According to a sixth aspect, an embodiment of this application provides a communication apparatus, including an interface circuit and a processor. The communication apparatus is configured to perform any one of the possible implementations of the first aspect or the third aspect.

The interface circuit may alternatively be a communication interface. The processor may alternatively be a logic circuit or a processing circuit.

According to a seventh aspect, an embodiment of this application provides a computer-readable medium, where the computer-readable medium stores program code to be executed by a terminal device, and the program code includes instructions used to perform any one of the possible implementations of the first aspect or the second aspect.

According to an eighth aspect, an embodiment of this application provides a computer program product storing computer-readable instructions. When the computer-readable instructions are run on a computer, the computer is enabled to perform any one of the possible implementations of the first aspect or the second aspect.

According to a ninth aspect, an embodiment of this application provides a communication system. The communication system includes an apparatus that has a function of implementing any one of the possible implementations of the first aspect or the second aspect.

According to a tenth aspect, an embodiment of this application provides a processor, configured to be coupled to a memory, and configured to perform any one of the possible implementations of the first aspect or the second aspect.

According to an eleventh aspect, a communication apparatus is provided, including: a processor, configured to execute computer instructions stored in a memory, so that the communication apparatus performs the method according to any one of the possible implementations of the first aspect or the second aspect.

In a possible implementation, the communication apparatus further includes the memory.

In a possible implementation, the communication apparatus further includes a communication interface, the communication interface is coupled to the processor, and the communication interface is configured to input and/or output information.

According to a twelfth aspect, a chip is provided. The chip is connected to a memory, and the chip is configured to read and execute a software program stored in the memory, to perform the method according to any one of the possible implementations of the first aspect or the second aspect.

### BRIEF DESCRIPTION OF DRAWINGS

FIG. 1A and FIG. 1B are diagrams of a communication system to which an embodiment of this application is applicable;
FIG. 2 is a diagram of small aperture observation;
FIG. 3 is a diagram of large aperture observation;
FIG. 4 is a schematic flowchart of interaction of an information transmission method according to an embodiment of this application;
FIG. 5 is a diagram of a sensing scenario according to an embodiment of this application;
FIG. 6 is a diagram of another sensing scenario according to an embodiment of this application;
FIG. 7 is a diagram of a simulation scenario according to an embodiment of this application;
FIG. 8A and FIG. 8B are diagrams of a simulation result according to an embodiment of this application;
FIG. 9 is a diagram of a communication apparatus according to an embodiment of this application; and
FIG. 10 is a diagram of another communication apparatus according to an embodiment of this application.

### DESCRIPTION OF EMBODIMENTS

For ease of understanding embodiments of this application, the following descriptions are provided first.
1. Unless otherwise specified, "at least two" means two or more.
2. Unless otherwise particularly stated or there is a logic conflict, terms and/or descriptions in different embodiments of this application are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) arrangement sequence of all information, so as to reduce enabling overheads to some extent. In addition, a common part of all the information may be identified and enabled in a unified manner, to reduce enabling overheads caused by enabling the same information separately.
6. The term "store" or "save" in this application may mean storing in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
7. The "protocol" in this application may be a standard protocol in the communication field, for example, may include a 5^{th} generation (5^{th} generation, 5G) network protocol, a new radio (new radio, NR) protocol, a 5.5G network protocol, a 6^{th} generation (6^{th} generation, 6G) network protocol, and a related protocol applied to a future communication system. This is not limited in this application.
8. Arrows or blocks shown by dashed lines in diagrams of the accompanying drawings in this specification of this application indicate optional steps or optional modules.
9. Unless otherwise stated, "/" indicates an "or" relationship between associated objects, for example, A/B may represent A or B. The term "and/or" in this application describes only an association relationship between associated objects, and indicates that three relationships may exist. For example, A and/or B may represent three cases: Only A exists, both A and B exist, and only B exists. A and B may be singular or plural.

First, a communication system to which an embodiment of this application is applicable is described.

The technical solutions provided in this application may be applied to various communication systems, for example, a 5G or NR system, and a future communication system, for example, a 6G mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (Internet of Things, IoT) communication system, or another communication system. This is not limited in this application.

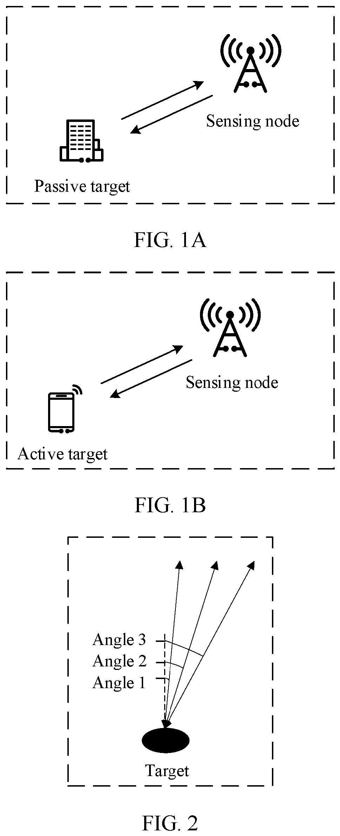

The following uses FIG. 1A and FIG. 1B as an example to describe an example of a communication system to which an embodiment of this application is applicable.

FIG. 1A and FIG. 1B are diagrams of a communication system to which an embodiment of this application is applicable. As shown in FIG. 1A, the communication system includes a passive target (for example, a vehicle, or a building) and a sensing node. The sensing node may be a network device, a terminal device, or the like. As shown in FIG. 1B, the communication system includes an active target and a sensing node, and both the active target and the sensing node may be a network device, a terminal device, or the like.

It should be understood that FIG. 1A merely provides an example of a sensing node and a passive target. FIG. 1A may alternatively include more sensing nodes and passive targets. In addition, FIG. 1A may alternatively include one or more active targets. Similarly, FIG. 1B merely provides an example of a sensing node and an active target. FIG. 1B may alternatively include more sensing nodes and active targets. In addition, FIG. 1B may alternatively include one or more passive targets.

The active target is a target node that has a communication link with the sensing node, and the passive target is a target node that has no communication link with the sensing node.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), a transmission reception point (transmission reception point, TRP) or the like in a wireless fidelity (wireless fidelity, Wi-Fi) system, may be a gNB, a TRP or a TP in a 5G system, for example, an NR system, or one or one group (including a plurality of antenna panels) of antenna panels of a base station in a 5G system, or may be a network node that forms a gNB or a transmission point, for example, a BBU or a distributed unit (distributed unit, DU), or a base station in a next generation communication 6G system.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of radio resource control (radio resource control, RRC) and packet data convergence protocol (packet data convergence protocol, PDCP) layers. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

The network device in embodiments of this application may alternatively be an open-radio access network (open-radio access network, O-RAN) device (open RAN, or ORAN). To be specific, the network device includes a plurality of RAN nodes, the plurality of RAN nodes coordinate to assist a terminal device in implementing radio access, and different RAN nodes respectively implement some functions of the network device. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in a remote radio unit (remote radio unit, RRU), an AAU, or a remote radio head (remote radio head, RRH). For example, in some deployments, the network device may include a CU and a DU. In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU (open DU), the CU-CP may also be referred to as an O-CU-CP (open CU-CP), the CU-UP may also be referred to as an O-CU-UP (open CU-UP), and the RU may also be referred to as an O-RU (open RU). For ease of description, the CU, the CU-CP, the CU-UP, the DU, and/or the RU are used as examples for description in this application. Any one of the CU (or the CU-CP or the CU-UP), the DU, and/or the RU in this application may be implemented by using a software module, a hardware module, or a combination of a software module and a hardware module.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or an in-vehicle device that has a wireless connection function. Currently, some examples of the terminal may be: a mobile phone (mobile phone), a pad (pad), a computer having a wireless transceiver function (for example, a notebook computer or a palmtop computer), a mobile Internet device (mobile Internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, an in-vehicle device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an IoT system. IoT is an important part in future development of the information technology. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

To better understand the technical solutions recorded in embodiments of this application, the following briefly describes some technical terms in embodiments of this application.

### 1. Radar cross section (radar cross section, RCS):

The RCS is defined as a ratio of power scattered by a target per unit solid angle toward a receiver to power density of an incident wave on the target. The RCS may be mathematically expressed as: $RCS = {lim}_{n \to ∞} 4 {πR}^{2} {S}_{s} / {S}_{i}$

In formula (1), R is a distance between the target and the receiver, Sₛ is scattered power density at the receiver, and Sᵢ is incident power density measured at the target.

The RCS is a physical quantity that represents intensity of an echo generated by the target under radar illumination.

The RCS, also referred to as a backscattering cross section, is a measure of a capability of scattering a radar signal by the target in a radar incident direction, and may be represented in a normalized form using power density of an incident field. The RCS is related to a frequency, an aspect angle, and polarization of the incident wave.

The RCS of the target may be obtained from a synthetic aperture radar (synthetic aperture radar, SAR) image of the target.

It should be noted that an application range of the RCS is not limited to the radar sensing field, and may also include the wireless sensing field. In other words, the RCS indicates a ratio of transmit power of an incident wave to scattered power. A part about the radar in the RCS definition is not used as a limitation that the RCS is applicable only to the radar field. With evolution of an integrated communication and sensing architecture or technology, the RCS may also use another name for indication, for example, power information, information about a ratio of incident power to scattered power, or a wireless scattering cross section. This is not limited.

### 2. Target scattering characteristics:

Target scattering characteristics may be defined as a characteristic that a target scattering field (an amplitude and a phase) changes with a frequency of an incident wave, a characteristic that the target scattering field changes with an aspect angle of the incident wave, a characteristic that the target scattering field changes with a polarization manner of the incident wave, and the like.

The target scattering characteristics can determine specific content of echo information that is of the target and that can be obtained by a wireless sensing system.

### 3. Isotropic scattering target and anisotropic scattering target:

The isotropic scattering target and the anisotropic scattering target are distinguished based on the change degree of the target scattering field with the aspect angle of the incident wave. For example, the isotropic scattering target is a target whose target scattering field does not change with the aspect angle of the incident wave, and the anisotropic scattering target is a target whose target scattering field changes with the aspect angle of the incident wave to a high degree.

Generally, if a phase fluctuation of the scattering field of the anisotropic scattering target is less than π/4, the anisotropic scattering target may also be approximately considered as the isotropic target.

### 4. Small aperture observation:

FIG. 2 is a diagram of small aperture observation. As shown in FIG. 2, a sensing node may sense a target in a small angle range. For example, a sensing node sends a radio signal 1 (represented by a black arrow) to the target at an angle 1 (for example, 1°), and receives a signal obtained after the target reflects the radio signal 1; a sensing node sends a radio signal 2 (represented by a black arrow) to the target at an angle 2 (for example, 2°), and receives a signal obtained after the target reflects the radio signal 2; and a sensing node 3 sends a radio signal 3 (represented by a black arrow) to the target at an angle 3 (for example, 3°), and receives a signal obtained after the target reflects the radio signal 3. The angle 1, the angle 2, and the angle 3 may form a small angle range (for example, 1° to 3°).

As described above for the isotropic scattering target, in the small aperture observation scenario, because a span between angles is small (which may be understood as that an angle difference between the largest angle and the smallest angle is within a threshold, for example, 3°, or may be another value, and this is not limited), based on an assumption that the target is the isotropic scattering target, coherent processing may be performed on data obtained from a small angle range.

The foregoing "coherent processing" is a process of processing coherent signals. The coherent signals are signals having a specific phase relationship and a specific frequency relationship, and there is a specific coherence between the coherent signals. In coherent processing, useful information may be extracted by using the phase and frequency relationships between signals. For example, coherent accumulation is used to enhance signal strength, improve system resolution, or the like.

In addition, the foregoing "non-coherent processing" is a process of processing non-coherent signals. The non-coherent signals are signals that have no clear phase relationship or frequency relationship, and there is no coherence between the signals. In non-coherent processing, statistical characteristics of signals, such as a mean, a variance, and a power spectrum, are mainly concerned. Non-coherent processing is usually used to process a noise signal, for example, increase a signal-to-noise ratio by using a method such as filtering or noise reduction, to increase precision.

Specifically, a core of coherent processing is to know frequency and phase relationships between signals. For the isotropic scattering target, because scattering characteristics of the target are consistent in all directions, specific distribution of the scattering characteristics of the target is not required, and only transmitted signals need to be maintained coherent, so that received echo signals naturally maintain coherent. For the anisotropic scattering target, received echo signals are equivalent to being loaded with different modulations in all directions, and frequency and phase relationships between the received signals cannot be derived only from the frequency and phase relationships between the transmitted signals. If the specific distribution of the scattering characteristics of the target is unknown, the frequency and phase relationships between the received signals that are obtained are also unknown. In this case, the signals may be considered as non-coherent, and only non-coherent processing can be performed on the signals. Using signal demodulation as an example, in a signal processing process, a receive end needs frequency and phase information of an original signal for coherent processing. This manner is referred to as coherent demodulation. If only an envelope of a received signal is used as information for processing, this manner is referred to as non-coherent demodulation.

### 5. Large aperture observation:

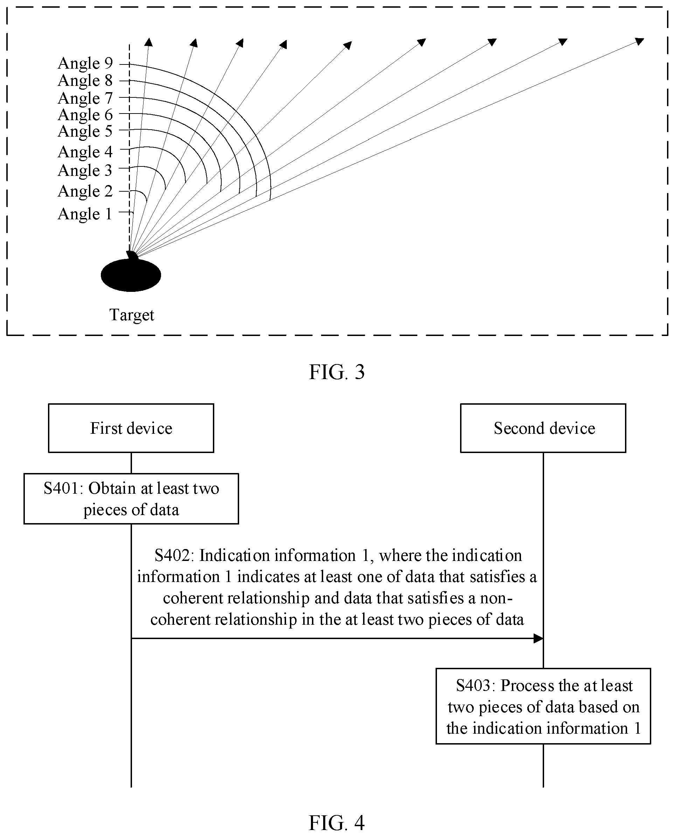

FIG. 3 is a diagram of large aperture observation. As shown in FIG. 3, a sensing node may sense a target in a large angle range. For example, a sensing node sends a radio signal 1 (represented by a black arrow) to the target at an angle 1 (for example, 1°), and receives a signal obtained after the target reflects the radio signal 1; a sensing node sends a radio signal 2 (represented by a black arrow) to the target at an angle 2 (for example, 2°), and receives a signal obtained after the target reflects the radio signal 2; a sensing node 3 sends a radio signal 3 (represented by a black arrow) to the target at an angle 3 (for example, 3°), and receives a signal obtained after the target reflects the radio signal 3; a sensing node sends a radio signal 4 (represented by a black arrow) to the target at an angle 4 (for example, 4°), and receives a signal obtained after the target reflects the radio signal 4; a sensing node sends a radio signal 5 (represented by a black arrow) to the target at an angle 5 (for example, 5°), and receives a signal obtained after the target reflects the radio signal 5; a sensing node 3 sends a radio signal 6 (represented by a black arrow) to the target at an angle 6 (for example, 6°), and receives a signal obtained after the target reflects the radio signal 6; a sensing node sends a radio signal 7 (represented by a black arrow) to the target at an angle 7 (for example, 7°), and receives a signal obtained after the target reflects the radio signal 7; a sensing node sends a radio signal 8 (represented by a black arrow) to the target at an angle 8 (for example, 8°), and receives a signal obtained after the target reflects the radio signal 8; and a sensing node 9 sends a radio signal 9 (represented by a black arrow) to the target at an angle 9 (for example, 9°), and receives a signal obtained after the target reflects the radio signal 9.

The angle 1 to the angle 9 may form a large angle range (for example, 1° to 9°) (which may be understood as that an angle difference between the largest angle and the smallest angle is beyond a threshold, for example, 3°, or may be another value, and this is not limited).

Because most targets are anisotropic scattering targets, in the small aperture observation scenario, the target may be approximated as the isotropic scattering target. However, in the large aperture observation scenario, the assumption that the target is the isotropic scattering target is no longer established. In this case, if coherent processing is performed, based on the assumption of the isotropic scattering target, on data obtained in large aperture observation, obvious defocus and distortion occur.

In view of this, embodiments of this application provide an information transmission method, and a communication apparatus and system, to support proper processing on data obtained in a large aperture observation scenario.

The following describes an information transmission method and a communication apparatus and system in embodiments of this application with reference to the accompanying drawings.

For ease of understanding and description, the following describes the information transmission method in embodiments of this application by using interaction between a first apparatus and a second apparatus as an example. However, this should not constitute any limitation on an execution body of the information transmission method in embodiments of this application. For example, the first apparatus shown below may be replaced with a component (such as a circuit, a chip, or a chip system) configured in the first apparatus, and the second apparatus may be replaced with a component (such as a circuit, a chip, or a chip system) configured in the second apparatus.

It should be noted that the apparatus in this embodiment of this application may be a communication device, a device, a component in a device, a chip system, or the like. This is not limited. For example, the first apparatus may be a first device, a first component, a first chip, or the like.

It should be noted that the first apparatus and the second apparatus may be sensing nodes in FIG. 1A and FIG. 1B.

FIG. 4 is a schematic flowchart of interaction of an information transmission method according to an embodiment of this application. As shown in FIG. 4, the method includes the following steps.

S401: The first apparatus obtains at least two pieces of data, where each of the at least two pieces of data includes scattering characteristic information obtained by sensing a target 1 at a corresponding measurement angle (or observation angle).

For example, the first apparatus may separately obtain data from different measurement devices. For example, a measurement device 1 sends data 1 to the first apparatus, a measurement device 2 sends data 2 to the first apparatus, and a measurement device 3 sends data 3 to the first apparatus. Different measurement devices may form a measurement device group. The first apparatus may alternatively obtain data from different measurement device groups.

For another example, the first apparatus may obtain the at least two pieces of data from one measurement device. For example, the measurement device 1 obtains data from another measurement device, and sends the at least two pieces of data to the first apparatus.

In conclusion, a way or a manner in which the first apparatus obtains the at least two pieces of data is not limited in this application.

The foregoing measurement angle may be determined by using the target 1 as a reference object, or may be determined by using another object (for example, the first apparatus) as a reference object. This is not limited. For ease of description, the following uses an example in which the measurement angle is determined by using the target 1 as a reference object for description.

The target 1 may be a complete object, or may be a part of a complete object. This is not limited either. Further, when the target 1 is a part of a complete object, based on the technical solution recorded in this embodiment of this application, this application also supports proper processing on data obtained from the complete object.

For ease of description, the following uses 10 pieces of data as an example for description. For example, the first apparatus obtains the 10 pieces of data, and each of the 10 pieces of data includes scattering characteristic information obtained by sensing the target 1 at the corresponding measurement angle. For a relationship among the data, the measurement angle, and the scattering characteristic information, refer to Table 1. Content shown in Table 1 is merely used as an example for understanding, and does not constitute any limitation.

**Table 1**

| Data | Measurement angle | Scattering characteristic information |
|---|---|---|
| Data 1 | Measurement angle 1 | Scattering characteristic information 1 |
| Data 2 | Measurement angle 2 | Scattering characteristic information 2 |
| Data 3 | Measurement angle 3 | Scattering characteristic information 3 |
| Data 4 | Measurement angle 4 | Scattering characteristic information 4 |
| Data 5 | Measurement angle 5 | Scattering characteristic information 5 |
| Data 6 | Measurement angle 6 | Scattering characteristic information 6 |
| Data 7 | Measurement angle 7 | Scattering characteristic information 7 |
| Data 8 | Measurement angle 8 | Scattering characteristic information 8 |
| Data 9 | Measurement angle 9 | Scattering characteristic information 9 |
| Data 10 | Measurement angle 10 | Scattering characteristic information 10 |

As shown in Table 1:
- the target 1 is sensed at the measurement angle 1, to obtain the data 1 including the scattering characteristic information 1;
- the target 1 is sensed at the measurement angle 2, to obtain the data 2 including the scattering characteristic information 2;
- the target 1 is sensed at the measurement angle 3, to obtain the data 3 including the scattering characteristic information 3;
- the target 1 is sensed at the measurement angle 4, to obtain the data 4 including the scattering characteristic information 4;
- the target 1 is sensed at the measurement angle 5, to obtain the data 5 including the scattering characteristic information 5;
- the target 1 is sensed at the measurement angle 6, to obtain the data 6 including the scattering characteristic information 6;
- the target 1 is sensed at the measurement angle 7, to obtain the data 7 including the scattering characteristic information 7;
- the target 1 is sensed at the measurement angle 8, to obtain the data 8 including the scattering characteristic information 8;
- the target 1 is sensed at the measurement angle 9, to obtain the data 9 including the scattering characteristic information 9; and
- the target 1 is sensed at the measurement angle 10, to obtain the data 10 including the scattering characteristic information 10.

An interval between the foregoing measurement angles is not limited in this embodiment of this application. For example, the interval may be 1°, or may be 2°. For example, if the interval is 1°, the measurement angle 1 is 1°, the measurement angle 2 is 2°, ..., and the measurement angle 10 is 10°; or if the interval is 2°, the measurement angle 1 is 1°, the measurement angle 2 is 3°, ..., and the measurement angle 10 is 19°.

Optionally, intervals between the foregoing measurement angles may be even, or may be uneven. For example, the measurement angle 1 is 1°, the measurement angle 2 is 2°, and the measurement angle 3 is 2.5°.

It should be noted that the foregoing measurement angle may be an azimuth angle, or may be an elevation angle, and is in units of radians or degrees.

It should be further noted that the foregoing measurement angle may alternatively be replaced with a measurement location (which may be determined by using the target 1 as a reference object), and the measurement location may be used to determine the measurement angle.

In a possible implementation, the scattering characteristic information may be at least one of the following:
an RCS, scattering intensity, and a scattering phase.

The scattering intensity is intensity of a scattered signal, and the scattering phase is a phase of the scattered signal. In this way, the at least two pieces of data may be classified by using one or more of the foregoing items, so as to determine at least one of data that satisfies a coherent relation and data that satisfies a non-coherent relation in the at least two pieces of data.

Information carried in different scattering characteristic information may be different or may be the same. This is not limited. For example, information carried in the scattering characteristic information 1 may be the same as information carried in the scattering characteristic information 2, or may be different from the information carried in the scattering characteristic information 2.

Further, types of information carried in different scattering characteristic information need to be the same. For example, the scattering characteristic information 1 to the scattering characteristic information 10 all carry the RCS, the scattering intensity, the scattering phase, or the like. This helps the first apparatus process the scattering characteristic information 1 to the scattering characteristic information 10.

In a possible implementation, some or all of the foregoing 10 pieces of data are source data obtained by sensing the target at corresponding measurement angles, or some or all of the foregoing 10 pieces of data are data obtained by processing source data obtained by sensing the target at corresponding measurement angles.

In this way, the scattering characteristic information of the target can be obtained by processing two or more pieces of source data or data (including the scattering characteristic information of the target) obtained after the source data is processed, to implement angle division, and further implement coherent processing and non-coherent processing on the at least two pieces of data separately, so that a resolution gain and a precision gain can be achieved at the same time.

The "source data" is raw echo signal data obtained by sensing the target.

For example, the data 1 is source data obtained by sensing the target 1 at the measurement angle 1, the data 2 is source data obtained by sensing the target 1 at the measurement angle 2, the data 3 is source data obtained by sensing the target 1 at the measurement angle 3, the data 4 is source data obtained by sensing the target 1 at the measurement angle 4, the data 5 is source data obtained by sensing the target 1 at the measurement angle 5, the data 6 is source data obtained by sensing the target 1 at the measurement angle 6, the data 7 is source data obtained by sensing the target 1 at the measurement angle 7, the data 8 is source data obtained by sensing the target 1 at the measurement angle 8, the data 9 is source data obtained by sensing the target 1 at the measurement angle 9, and the data 10 is source data obtained by sensing the target 1 at the measurement angle 10.

For another example, the data 1 is source data obtained by sensing the target 1 at the measurement angle 1, the data 2 is data obtained by processing source data obtained by sensing the target 1 at the measurement angle 2, the data 3 is source data obtained by sensing the target 1 at the measurement angle 3, the data 4 is source data obtained by sensing the target 1 at the measurement angle 4, the data 5 is data obtained by processing source data obtained by sensing the target 1 at the measurement angle 5, the data 6 is source data obtained by sensing the target 1 at the measurement angle 6, the data 7 is source data obtained by sensing the target 1 at the measurement angle 7, the data 8 is source data obtained by sensing the target 1 at the measurement angle 8, the data 9 is source data obtained by sensing the target 1 at the measurement angle 9, and the data 10 is source data obtained by sensing the target 1 at the measurement angle 10.

For another example, the data 1 is data obtained by processing source data obtained by sensing the target 1 at the measurement angle 1, the data 2 is data obtained by processing source data obtained by sensing the target 1 at the measurement angle 2, the data 3 is data obtained by processing source data obtained by sensing the target 1 at the measurement angle 3, the data 4 is data obtained by processing source data obtained by sensing the target 1 at the measurement angle 4, the data 5 is data obtained by processing source data obtained by sensing the target 1 at the measurement angle 5, the data 6 is data obtained by processing source data obtained by sensing the target 1 at the measurement angle 6, the data 7 is data obtained by processing source data obtained by sensing the target 1 at the measurement angle 7, the data 8 is data obtained by processing source data obtained by sensing the target 1 at the measurement angle 8, the data 9 is data obtained by processing source data obtained by sensing the target 1 at the measurement angle 9, and the data 10 is data obtained by processing source data obtained by sensing the target 1 at the measurement angle 10.

It should be noted that "processing on the source data" includes at least one of processing such as filtering, focusing, and mapping, and data obtained after the source data is processed should include the scattering characteristic information of the target.

S402: The first apparatus sends indication information 1 to the second apparatus.

Correspondingly, the second apparatus receives the indication information 1.

The indication information 1 indicates at least one of the data that satisfies the coherent relation and the data that satisfies the non-coherent relation in the foregoing 10 pieces of data.

For example, the indication information 1 indicates the data that satisfies the coherent relation in the foregoing 10 pieces of data. Correspondingly, in the foregoing 10 pieces of data, data other than the data that satisfies the coherent relation satisfies the non-coherent relation.

It should be noted that, that the data satisfies the coherent relation means that there is a phase relationship and a frequency relationship between signal data. In addition, that the data satisfies the non-coherent relation means that there is no clear phase relationship or frequency relationship between the signal data.

For another example, the indication information 1 indicates the data that satisfies the non-coherent relation in the foregoing 10 pieces of data. Correspondingly, in the foregoing 10 pieces of data, data other than the data that satisfies the non-coherent relation satisfies the coherent relation.

For another example, the indication information 1 indicates the data that satisfies the coherent relation and the data that satisfies the non-coherent relation in the foregoing 10 pieces of data.

For descriptions of the data that satisfies the coherent relation and the data that satisfies the non-coherent relation, refer to Table 2. Content shown in Table 2 is merely used as an example for understanding, and does not constitute any limitation.

**Table 2**

| Data that satisfies the coherent relation | Data that satisfies the non-coherent relation |
|---|---|
| {Data 1, data 2, data 3, data 4, data 5} | {Data 6, data 7, data 8, data 9, data 10} |
| {Data 1, data 2}, {data 6, data 7} | {Data 3, data 4, data 5}, {data 8, data 9, data 10} |
| {Data 1, data 2, data 3}, {data 6, data 7, data 8, data 9, data 10} | {Data **4,** data 5} |
| {Data 1, data 2, data 3, data 4}, {data 6, data 7, data 8, data 9, data 10} | {Data 5} |

As shown in Table 2:
- the data 1 to the data 5 are the data that satisfies the coherent relation, and the data 6 to the data 10 are the data that satisfies the non-coherent relation;
- the data 1 and the data 2 are the data that satisfies the coherent relation, the data 6 and the data 7 are the data that satisfies the coherent relation, the data 3 to the data 5 are the data that satisfies the non-coherent relation, and the data 8 to the data 10 are the data that satisfies the non-coherent relation;
- the data 1 to the data 3 are the data that satisfies the coherent relation, the data 6 to the data 10 are the data that satisfies the coherent relation, and the data 4 and the data 5 are the data that satisfies the non-coherent relation; or
- the data 1 to the data 4 are the data that satisfies the coherent relation, and the data 6 to the data 10 are the data that satisfies the coherent relation.

It should be noted that, if there are a plurality of groups of data that satisfies the coherent relation, the plurality of groups of data that satisfies the coherent relation satisfy the non-coherent relation.

In a possible implementation, the indication information 1 indicates the coherent relation and the non-coherent relation between the data by using label information of the data (which may be carried in the data itself, or may be carried in information used to carry the data, and this is not limited).

For example, each piece of data obtained by the first apparatus includes a label corresponding to the data. For example, the data 1 carries a label 1, the data 2 carries a label 2, the data 3 carries a label 3, the data 4 carries a label 4, the data 5 carries a label 5, the data 6 carries a label 6, the data 7 carries a label 7, the data 8 carries a label 8, the data 9 carries a label 9, and the data 10 carries a label 10. Therefore, the first apparatus may configure a common set index for the data that satisfies the coherent relation.

With reference to Table 2, in an example, the data 1 to the data 5 are the data that satisfies the coherent relation, the first apparatus configures an index 1 for the data 1 to the data 5, where the index 1 is associated with the data 1 to the data 5; and the data 6 to the data 10 are the data that satisfies the non-coherent relation, the first apparatus configures an index 2 for the data 6 to the data 10, where the index 2 is associated with the data 6 to the data 10.

Further, the first apparatus and the second apparatus may agree on a meaning of an index. For example, the index 1 can indicate that the coherent relation is met, and the index 2 can indicate that the non-coherent relation is met.

With reference to Table 2, in an example, the data 1 and the data 2 are the data that satisfies the coherent relation, and the first apparatus configures an index 1 for the data 1 and the data 2, where the index 1 is associated with the data 1 and the data 2; the data 6 and the data 7 are the data that satisfies the coherent relation, and the first apparatus configures an index 2 for the data 6 and the data 7, where the index 2 is associated with the data 6 and the data 7; the data 3 to the data 5 are the data that satisfies the non-coherent relation, and the first apparatus configures an index 3 for the data 3 to the data 5, where the index 3 is associated with the data 3 to the data 5; and the data 8 to the data 10 are the data that satisfies the non-coherent relation, and the first apparatus configures an index 4 for the data 8 to the data 10, where the index 4 is associated with the data 8 to the data 10.

Further, the first apparatus and the second apparatus may agree on a meaning of an index. For example, the index 1 and the index 2 can indicate that the coherent relation is met, and the index 3 and the index 4 can indicate that the non-coherent relation is met.

With reference to Table 2, in an example, the data 1 to the data 3 are the data that satisfies the coherent relation, and the first apparatus configures an index 1 for the data 1 to the data 3; the data 6 to the data 10 are the data that satisfies the coherent relation, and the first apparatus configures an index 2 for the data 6 to the data 10; and the data 4 and the data 5 are the data that satisfies the non-coherent relation, and the first apparatus configures an index 3 for the data 4 and the data 5.

Further, the first apparatus and the second apparatus may agree on a meaning of an index. For example, the index 1 and the index 2 can indicate that the coherent relation is met, and the index 3 can indicate that the non-coherent relation is met.

With reference to Table 2, in an example, the data 1 to the data 4 are the data that satisfies the coherent relation, and the first apparatus configures an index 1 for the data 1 to the data 4; and the data 6 to the data 10 are the data that satisfies the coherent relation, and the first apparatus configures an index 2 for the data 6 to the data 10.

Further, the first apparatus and the second apparatus may agree on a meaning of an index. For example, the index 1 and the index 2 can indicate that the coherent relation is met.

In another possible implementation, the indication information 1 may include at least one angle range. Data corresponding to different measurement angles belonging to one angle range satisfies the coherent relation or the non-coherent relation.

For example, the at least one angle range includes a first angle range, and data corresponding to measurement angles within the first angle range satisfies the coherent relation, or data corresponding to measurement angles within the first angle range satisfies the non-coherent relation.

For another example, the at least one angle range further includes a second angle range, and data corresponding to measurement angles within the second angle range satisfies the non-coherent relation, or data corresponding to measurement angles within the second angle range satisfies the coherent relation.

Specifically, there is an association relationship between an angle within each angle range and data, and at least one of the data that satisfies the coherent relation and the data that satisfies the non-coherent relation in the at least two pieces of data may be indicated by using different angle ranges. This can reduce signaling indication overheads.

When the at least one angle range includes the first angle range, and the data corresponding to the measurement angles within the first angle range satisfies the coherent relation, the second apparatus may perform coherent processing (for example, coherent accumulation) on the data corresponding to the angles within the first angle range, to achieve a resolution gain, or when the data corresponding to the measurement angles within the first angle range satisfies the non-coherent relation, the second apparatus may perform non-coherent processing (for example, non-coherent accumulation) on the data corresponding to the angles within the first angle range, to achieve a precision gain.

When the at least one angle range includes the second angle range, and the data corresponding to the measurement angles within the second angle range satisfies the coherent relation, the second apparatus may perform coherent processing (for example, coherent accumulation) on the data corresponding to the angles within the second angle range, to achieve a resolution gain, or when the data corresponding to the measurement angles within the second angle range satisfies the non-coherent relation, the second apparatus may no longer perform coherent processing on the data corresponding to the angles within the second angle range, to avoid interference to other data, but perform non-coherent processing (for example, non-coherent accumulation), to increase a signal-to-noise ratio, thereby achieving a precision gain.

It should be noted that the data corresponding to the first angle range and the data corresponding to the second angle range satisfy the non-coherent relation. In this way, coherent processing is no longer performed on the data corresponding to the angles within the first angle range and the data corresponding to the angles within the second angle range, to avoid interference of the data corresponding to the angles within the second angle range to the data corresponding to the angles within the first angle range.

It may be understood that each piece of data includes data obtained by sensing the target 1 at the corresponding measurement angle. Therefore, there is a correspondence between the data and the measurement angle.

In a possible implementation, each of the foregoing 10 pieces of data may further include a measurement angle corresponding to the data. In this way, the first apparatus may indicate, in a manner of indicating an angle range, at least one of the data that satisfies the coherent relation and the data that satisfies the non-coherent relation in the foregoing 10 pieces of data.

For descriptions of the angle range, refer to Table 3. Content shown in Table 3 is merely used as an example for understanding, and does not constitute any limitation.

**Table 3**

| Measurement angle corresponding to data that satisfies the coherent relation | Measurement angle corresponding to data that satisfies the non-coherent relation |
|---|---|
| {Measurement angle 1, measurement angle 2, measurement angle 3, measurement angle 4, measurement angle 5} | {Measurement angle 6, measurement angle 7, measurement angle 8, measurement angle 9, measurement angle 10} |
| {Measurement angle 1, measurement angle 2}, {measurement angle 6, measurement angle 7} | {Measurement angle 3, measurement angle 4, measurement angle 5}, {measurement angle 8, measurement angle 9, measurement angle 10} |
| {Measurement angle 1, measurement angle 2, measurement angle 3}, {measurement angle 6, measurement angle 7, measurement angle 8, measurement angle 9, measurement angle 10} | {Measurement angle 4, measurement angle 5} |
| {Measurement angle 1, measurement angle 2, measurement angle 3, measurement angle 4}, {measurement angle 6, measurement angle 7, measurement angle 8, measurement angle 9, measurement angle 10} | {Measurement angle 5} |

As shown in Table 3:
- an angle range 1 includes {measurement angle 1, measurement angle 2, measurement angle 3, measurement angle 4, measurement angle 5}, and an angle range 2 includes {measurement angle 6, measurement angle 7, measurement angle 8, measurement angle 9, measurement angle 10};
- an angle range 1 includes {measurement angle 1, measurement angle 2}, an angle range 2 includes {measurement angle 6, measurement angle 7}, an angle range 3 includes {measurement angle 3, measurement angle 4, measurement angle 5}, and an angle range 4 includes {measurement angle 8, measurement angle 9, measurement angle 10};
- an angle range 1 includes {measurement angle 1, measurement angle 2, measurement angle 3}, an angle range 2 includes {measurement angle 6, measurement angle 7, measurement angle 8, measurement angle 9, measurement angle 10}, and an angle range 3 includes {measurement angle 4, measurement angle 5}; or
- an angle range 1 includes {measurement angle 1, measurement angle 2, measurement angle 3, measurement angle 4}, an angle range 2 includes {measurement angle 6, measurement angle 7, measurement angle 8, measurement angle 9, measurement angle 10}, and an angle range 3 includes {measurement angle 5}.

It should be noted that, to enable the second apparatus to determine a type of a data relationship corresponding to each angle range, the first apparatus may configure a label for an angle range corresponding to the data that satisfies the coherent relation, and configure a label for an angle range corresponding to the data that satisfies the non-coherent relation. A meaning of the label may be predefined in a protocol, or may be indicated by the first apparatus to the second apparatus. This is not limited.

The indication information 1 is determined by the first apparatus based on the scattering characteristic information included in each of the 10 pieces of data.

For example, the indication information 1 is determined based on a derivative, with respect to the measurement angle, of the RCS included in each piece of data; or
for example, the indication information 1 is determined based on a statistical characteristic, with respect to the measurement angle, of the RCS included in each piece of data; or
for example, the indication information 1 is determined based on a derivative, with respect to the measurement angle, of the scattering phase included in each piece of data; or
for example, the indication information 1 is determined based on a statistical characteristic, with respect to the measurement angle, of the scattering phase included in each piece of data; or
for example, the indication information 1 is determined based on a derivative, with respect to the measurement angle, of the scattering intensity included in each piece of data; or
for example, the indication information 1 is determined based on a statistical characteristic, with respect to the measurement angle, of the scattering intensity included in each piece of data.

For the foregoing description, refer to Table 4. Content shown in Table 4 is merely used as an example, and does not constitute any limitation. For ease of description, the following is described by using an example in which the scattering characteristic information is the RCS. However, the following description is also applicable to a case in which the scattering characteristic information is the scattering intensity and the scattering phase.

**Table 4**

| Data | Value of the RCS of the target 1 at the corresponding measurement angle | Derivative of the RCS of the target 1 with respect to the measurement angle |
|---|---|---|
| Data 1 | 10 | 1.5 |
| Data 2 | 10.5 | 1.2 |
| Data 3 | 10.8 | 1.5 |
| Data 4 | 11.5 | 1.3 |
| Data 5 | 11.9 | 1.4 |
| Data 6 | 25 | 4 |
| Data 7 | 55 | 6 |
| Data 8 | 68 | 7 |
| Data 9 | 98 | 8 |
| Data 10 | 138 | 9 |

As shown in Table 4:
- for the data 1, the value of the RCS of the target 1 at the measurement angle 1 is 10, and the value of the derivative of the RCS corresponding to the target 1 with respect to the measurement angle is 1.5;
- for the data 2, the value of the RCS of the target 1 at the measurement angle 2 is 10.5, and the value of the derivative of the RCS corresponding to the target 1 with respect to the measurement angle is 1.2;
- for the data 3, the value of the RCS of the target 1 at the measurement angle 3 is 10.8, and the value of the derivative of the RCS corresponding to the target 1 with respect to the measurement angle is 1.5;
- for the data 4, the value of the RCS of the target 1 at the measurement angle 4 is 11.5, and the value of the derivative of the RCS corresponding to the target 1 with respect to the measurement angle is 1.3;
- for the data 5, the value of the RCS of the target 1 at the measurement angle 5 is 11.9, and the value of the derivative of the RCS corresponding to the target 1 with respect to the measurement angle is 1.4;
- for the data 6, the value of the RCS of the target 1 at the measurement angle 6 is 25, and the value of the derivative of the RCS corresponding to the target 1 with respect to the measurement angle is 4;
- for the data 7, the value of the RCS of the target 1 at the measurement angle 7 is 25, and the value of the derivative of the RCS corresponding to the target 1 with respect to the measurement angle is 6;
- for the data 8, the value of the RCS of the target 1 at the measurement angle 8 is 68, and the value of the derivative of the RCS corresponding to the target 1 with respect to the measurement angle is 7;
- for the data 9, the value of the RCS of the target 1 at the measurement angle 9 is 98, and the value of the derivative of the RCS corresponding to the target 1 with respect to the measurement angle is 8; and
- for the data 10, the value of the RCS of the target 1 at the measurement angle 10 is 138, and the value of the derivative of the RCS corresponding to the target 1 with respect to the measurement angle is 9.

Further, a threshold may be set, for example, the threshold=2. If the derivative value of the RCS corresponding to a part of data with respect to the measurement angle is less than or equal to the threshold, the part of data satisfies the coherent relation.

With reference to Table 4, the derivative value of the RCS corresponding to each piece of data in the data 1 to the data 5 with respect to the measurement angle is less than 2, and the derivative value of the RCS corresponding to each piece of data in the data 6 to the data 10 with respect to the measurement angle is greater than 2. Therefore, the data 1 to the data 5 are the data that satisfies the coherent relation, and the data 6 to the data 10 are the data that satisfies the non-coherent relation.

In addition, the foregoing content is described by using an example of calculating the derivative of the RCS with respect to the measurement angle. The foregoing description is also applicable to calculating the derivative of the scattering intensity with respect to the measurement angle and calculating the derivative of the scattering phase with respect to the measurement angle. Details are not described herein again.

In this embodiment of this application, the data that satisfies the coherent relation and the data that satisfies the non-coherent relation in the foregoing 10 pieces of data may alternatively be distinguished based on the statistical characteristic of the RCS with respect to the measurement angle.

For example, a K-means method may be used to perform clustering based on the statistical characteristic of the value of the RCS, to aggregate distances between 10 RCSs into two types. A K-means algorithm may divide a sample set into two clusters based on the given sample set and distances between samples. In this embodiment of this application, RCS values corresponding to the data 1 to the data 5 are close to each other, and the RCS values may be grouped into one cluster, and RCS values corresponding to the data 6 to the data 10 are not close to each other, and the RCS values may be grouped into the other cluster. To be specific, the data 1 to the data 5 are the data that satisfies the coherent relation, and the data 6 to the data 10 are the data that satisfies the non-coherent relation. Certainly, in this embodiment of this application, another clustering method, for example, Fuzzy C-means, Hierarchical, Mixture of Gaussians, or a technology such as machine learning or a neural network, may also be used to complete classification. This is not limited. It should be noted that the first apparatus may further broadcast the indication information 1 to another device.

In a possible implementation, the indication information 1 may further include identification information of the target 1, and the identification information of the target 1 can indicate that the target 1 is associated with the at least one angle range. In this way, the second apparatus can properly process the at least two pieces of data corresponding to the target, to better complete a task of sensing the target.

The foregoing "the angle range is associated with the target" may be that: the angle range is associated with the sensed target.

By associating the angle range with the target, the first apparatus may determine at least one of the data that satisfies the coherent relation and the data that satisfies the non-coherent relation in the at least two pieces of data corresponding to the target, and the second apparatus may also properly process the at least two pieces of data corresponding to the target, so as to better complete the task of sensing the target, and avoid a mismatch between the at least one angle range and the target, thereby avoiding deterioration of sensing quality.

The identification information of the target 1 includes at least one of coordinate information (which may include an earth coordinate system, an agreed-on parent coordinate system, or the like), an index, a label, and the like of the target 1.

S403: The second apparatus processes the at least two pieces of data based on the indication information 1.

For example, the second apparatus may determine, based on the indication information 1, the data that satisfies the coherent relation and the data that satisfies the non-coherent relation in the foregoing 10 pieces of data, perform coherent processing on the data that satisfies the coherent relation, perform non-coherent processing on the data that satisfies the non-coherent relation, and then perform comprehensive processing on the foregoing data.

In conclusion, the first apparatus may classify the data based on the scattering characteristic information included in the data. For example, the first apparatus classifies the at least two pieces of data into at least two types based on the scattering characteristic information included in each of the at least two pieces of data, for example, the data that satisfies the coherent relation and the data that satisfies the non-coherent relation. The first apparatus may indicate, to the second apparatus, types of different data in the at least two pieces of data or relationships that the different data in the at least two pieces of data meets. Further, the second apparatus may perform corresponding data processing on the different types of data. For example, the second apparatus performs coherent processing on the data that satisfies the coherent relation, and the second apparatus performs non-coherent processing on the data that satisfies the non-coherent relation.

Compared with an existing solution in which the at least two pieces of data are processed in a same data processing manner (for example, coherent processing or non-coherent processing), the foregoing solution may bring both a resolution gain (coherent processing is performed on the data that satisfies the coherent relation) and a precision gain (non-coherent processing is performed on the data that satisfies the non-coherent relation).

In conclusion, based on the foregoing technical solution, this application can support proper processing on data obtained in a large aperture observation scenario. For example, coherent processing is performed on the data that satisfies the coherent relation, so that the resolution gain can be brought, and non-coherent processing is performed on the data that satisfies the non-coherent relation, so that the precision gain can be brought. In this way, both the resolution gain and the precision gain can be brought.

Specifically, azimuth and elevation resolutions of a measurement device depend on a measurement angle range corresponding to the data that satisfies the coherent relation. Using continuous measurement angles of the azimuth as an example, a theoretical value of the azimuth resolution may be written as: $δ = ρ \frac{λ ⋅ R}{D ⋅ cos θ} \approx ρ \frac{λ}{φ ⋅ cos θ}$

In formula (2), ρ is a constant, λ is a wavelength, R is a distance from the target to a center of an azimuth aperture, D is a size of the azimuth aperture, θ is an included angle between a connection line between the target and the center of the azimuth aperture and a normal line of the azimuth aperture, and φ is a measurement angle range corresponding to the azimuth aperture relative to the target. Therefore, when coherent processing is performed on a plurality of groups of data that satisfies the coherent relation, it is equivalent to increasing φ, so that a resolution gain can be obtained.

A theoretical value of azimuth measurement precision of the target may be expressed as: $σ = α \frac{δ}{\sqrt{SNR}}$

In formula (3), α is a constant, δ is azimuth measurement resolution, and SNR is a signal-to-noise ratio (signal-to-noise ratio, SNR) of a signal. Non-coherent accumulation may be performed on the non-coherent data. For example, magnitudes of the data are calculated and directly summed up. The non-coherent accumulation may increase an SNR value, to obtain a precision gain.

In other words, the first apparatus may classify the data based on the scattering characteristic information that is included in the data and that is obtained by sensing the target 1 at the corresponding measurement angle. For example, the first apparatus distinguishes the data that satisfies the coherent relation from the data that satisfies the non-coherent relation in the at least two pieces of data obtained by sensing the target 1, and the second apparatus performs coherent processing on the data that satisfies the coherent relation, and performs non-coherent processing on the data that satisfies the non-coherent relation, so that proper processing on the data obtained in the large aperture observation scenario can be supported.

It should be noted that the precision may be understood as a degree of difference between a measurement result and a real value, and is usually represented by an error. The resolution may be understood as a minimum value that can be used for distinction.

It should be noted that the second apparatus may alternatively obtain the 10 pieces of data from another device, or may have the 10 pieces of data. This is not limited.

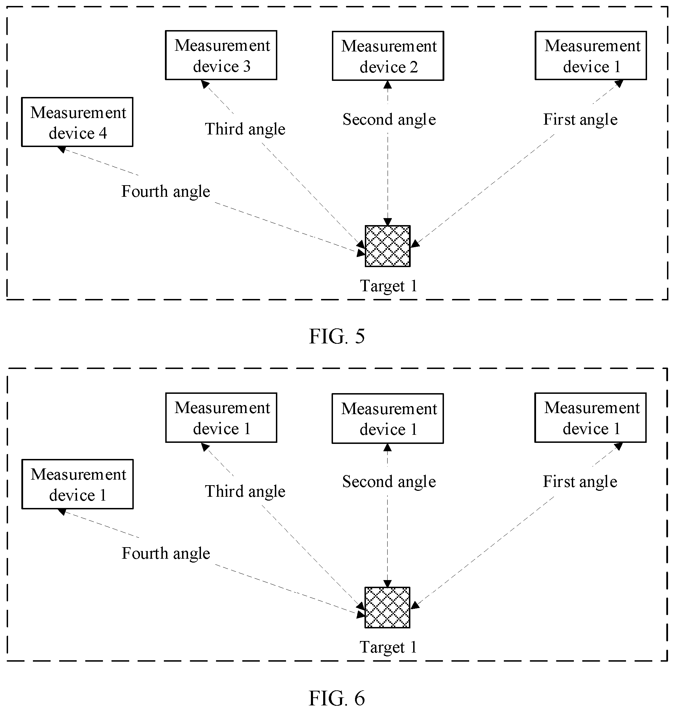

The following further describes, with reference to FIG. 5 and FIG. 6, the method shown in FIG. 4.

FIG. 5 is a diagram of a sensing scenario according to an embodiment of this application. As shown in FIG. 5, an example in which four measurement devices sense the target 1 is used. For example, a measurement device 1 senses the target 1 at a first angle, and obtains measurement data corresponding to the first angle; a measurement device 2 senses the target 1 at a second angle, and obtains measurement data corresponding to the second angle; a measurement device 3 senses the target 1 at a third angle, and obtains measurement data corresponding to the third angle; and a measurement device 4 senses the target 1 at a fourth angle, and obtains measurement data corresponding to the fourth angle.

Further, each measurement device may send, to the first apparatus, data (which may be source data or data obtained after the source data is processed, and this is not limited) obtained by each measurement device. The first apparatus may determine the indication information 1 based on the method in S402, and may send the indication information 1 to the first apparatus (which may be one device in the measurement device 1 to the measurement device 4, or may be another device, and this is not limited), or may send the indication information 1 to each measurement device (including the first apparatus).

When the first apparatus is one of the four measurement devices, the first apparatus may obtain the source data from another measurement device, and may process the obtained plurality of pieces of data based on the indication information 1. When the first apparatus is a device other than the four measurement devices, the first apparatus may obtain the source data from the four measurement devices, and may process the obtained plurality of pieces of data based on the indication information 1.

The scenario shown in FIG. 5 is a fixed scenario, and each measurement device is a measurement device with a fixed location. The measurement device may be a terminal device, or may be a network device. This is not limited.

FIG. 6 is a diagram of another sensing scenario according to an embodiment of this application. As shown in FIG. 6, an example in which one measurement device senses the target 1 at a plurality of angles is used. For example, a measurement device 1 senses the target 1 at a first angle, and obtains data corresponding to the first angle; the measurement device 1 senses the target 1 at a second angle, and obtains data corresponding to the second angle; the measurement device 1 senses the target 1 at a third angle, and obtains data corresponding to the third angle; and the measurement device 1 senses the target 1 at a fourth angle, and obtains data corresponding to the fourth angle.

Further, the measurement device 1 may send the obtained data (which may be source data, or data obtained after the source data is processed, and this is not limited) to the first apparatus. The first apparatus may determine the indication information 1 based on the method in S402, and send the indication information 1 to the first apparatus (which may be the measurement device 1, or may be another device, and this is not limited).

When the first apparatus is the measurement device 1, the first apparatus may process the obtained plurality of pieces of data based on the indication information 1. When the first apparatus is a device other than the measurement device 1, the first apparatus may obtain the source data from the measurement device 1, and may process the obtained plurality of pieces of data based on the indication information 1.

The scenario shown in FIG. 6 is a moving scenario, and each measurement device is a measurement device with a non-fixed location. The measurement device may be a terminal device. This is not limited.

It should be noted that the content shown in FIG. 5 and FIG. 6 is merely used as an example, and does not constitute any limitation.

It should be further noted that this application further supports a hybrid sensing scenario including a measurement device with a fixed location and a moving measurement device. Sensing performed by the measurement device with the fixed location may be referred to as real aperture sensing, and sensing performed by the moving measurement device may be referred to as virtual aperture sensing. A combination of the two may be referred to as hybrid aperture sensing.

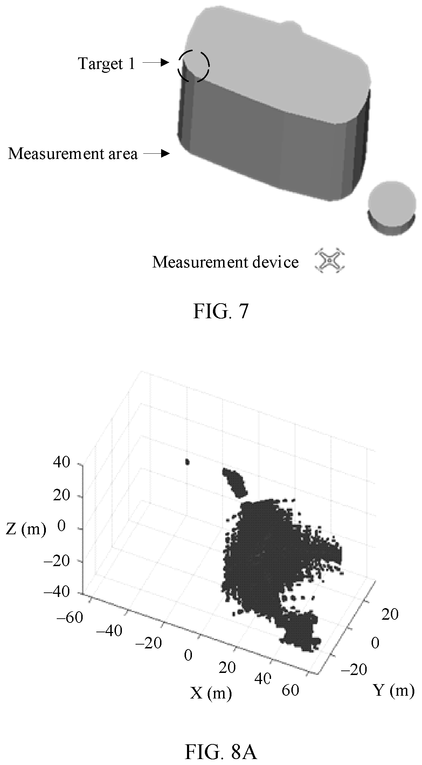

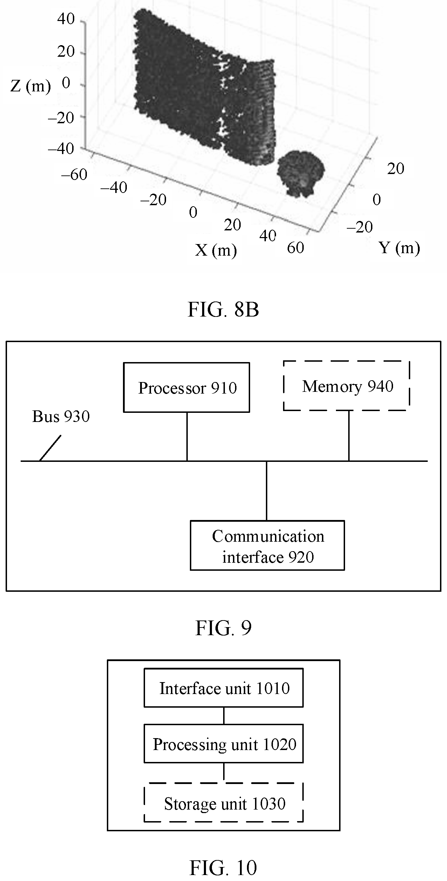

The following describes, with reference to FIG. 7 and FIG. 8A and FIG. 8B, a simulation scenario and a simulation result based on the foregoing solution.

FIG. 7 is a diagram of a simulation scenario according to an embodiment of this application. As shown in FIG. 7, both the first apparatus and the second apparatus may be unmanned aerial vehicles (measurement devices), and a measurement area includes two cylindrical buildings of different heights. The target 1 may be a part or a position (refer to a part indicated by a black dashed line in the figure) in the measurement area.

Simulation parameters are set as follows: The unmanned aerial vehicle carries a single sensing antenna. The antenna operates at a center frequency of 3.5 GHz with a bandwidth of 400 MHz. The unmanned aerial vehicle performs point-by-point scanning in the air, transmits signals, and receives echo signals. A path of the antenna forms a planar aperture of 1.45 m × 2.9 m. An included angle between the aperture and the X direction is 30°, an included angle between the aperture and the Z direction is 0°, and a spacing between scanning points is 8.57 cm.

FIG. 8A and FIG. 8B are diagrams of a simulation result according to an embodiment of this application. The simulation result shown in FIG. 8A and FIG. 8B corresponds to the simulation experiment shown in FIG. 7. Content shown in FIG. 8A is a result of processing data obtained when the target 1 shown in FIG. 7 is sensed by using an existing solution (for example, coherent processing is used), and content shown in FIG. 8B is a result of processing data obtained when the target 1 shown in FIG. 7 is sensed by using the solution shown in FIG. 4.

It can be learned by comparing FIG. 8A and FIG. 8B that, the technical processing result corresponding to this embodiment of this application basically matches a surface shape of a real target, and the processing result in the existing solution (coherent processing is used) has a large quantity of artifacts and distortions. Further quantitative comparison is performed between distances from a point cloud to the real target in FIG. 8A and FIG. 8B, and it is found that in FIG. 8B, an average distance from the point cloud to the target surface is 0.797 m, and a variance is 0.666 m, and in FIG. 8A, an average distance from the point cloud to the target surface is 3.814 m, and a variance is 5.101 m. It can be learned from the comparison result that, compared with the existing solution, the technical solutions recorded in this application can bring higher resolution and precision, and correspondingly, can also bring better sensing quality.

Finally, apparatus embodiments in embodiments of this application are described.

To implement functions in the method provided in this application, the first apparatus and the second apparatus may both include a hardware structure and/or a software module, to implement the foregoing functions in a form of the hardware structure, the software module, or a combination of the hardware structure and the software module. Whether a function in the foregoing functions is performed in the manner of the hardware structure, the software module, or the combination of the hardware structure and the software module depends on particular applications and design constraint conditions of the technical solutions.

FIG. 9 is a block diagram of a communication apparatus according to an embodiment of this application. The communication apparatus includes a processor 910 and a communication interface 920. The processor 910 and the communication interface 920 may be connected to each other through a bus 930. The communication apparatus may be a first apparatus, or may be a second apparatus.

Optionally, the communication apparatus may further include a memory 940. The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data.

The processor 910 may be one or more central processing units (central processing unit, CPU). When the processor 810 is one CPU, the CPU may be a single-core CPU or may be a multi-core CPU.

When the communication apparatus is the first apparatus, for example, the processor 910 is configured to perform the following operations: receiving indication information 1; processing at least two pieces of data based on the indication information 1; and the like.

When the communication apparatus is the second apparatus, for example, the processor 910 is configured to perform the following operations: receiving at least two pieces of data; sending indication information 1; and the like.

The foregoing content is merely used as an example for description. The communication apparatus is the first apparatus or the second apparatus, and is responsible for performing the methods or steps related to the first apparatus or the second apparatus in the foregoing method embodiment.

The foregoing description is merely example description. For specific content, refer to the content shown in the foregoing method embodiment.

It should be noted that, for implementations of the operations in FIG. 9, refer to the corresponding descriptions of the method embodiment shown in FIG. 4.

FIG. 10 is a block diagram of another communication apparatus according to an embodiment of this application. The communication apparatus may be a first apparatus or a second apparatus, or may be a chip or a module in the first apparatus or the second apparatus, and is configured to implement the method in the foregoing embodiment.

The communication apparatus includes an interface unit 1010 and a processing unit 1020. The interface unit 1010 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again.

When the communication apparatus is the first apparatus, for example, the interface unit 1010 is configured to receive first information and the like. The processing unit 1020 is configured to perform content related to steps such as processing and coordination of the first apparatus. For example, the processing unit 1020 is configured to receive indication information 1, and the processing unit 1020 is further configured to process at least two pieces of data based on the indication information 1, and the like.

When the communication apparatus is the second apparatus, for example, the interface unit 1010 is configured to: receive at least two pieces of data and send indication information 1; and the processing unit 1020 is configured to perform content related to steps such as processing and coordination of the second apparatus, for example, configured to determine the indication information 1.

The foregoing content is merely used as an example for description. The communication apparatus is the first apparatus or the second apparatus, and is responsible for performing the methods or steps related to the first apparatus or the second apparatus in the foregoing method embodiment.

Optionally, the communication apparatus further includes a storage unit 1030. The storage unit 1030 is configured to store a program or code used for performing the foregoing method.

It should be noted that the apparatus embodiment shown in FIG. 10 is used to implement the content described in FIG. 4. For specific steps and methods performed by the apparatus shown in FIG. 10, refer to the content described in the foregoing method embodiment.

It should be noted that the apparatuses in FIG. 9 and FIG. 10 may alternatively be a chip, a chip system, or the like. This is not limited herein. When the apparatuses shown in FIG. 9 and FIG. 10 are a chip or a chip system, the apparatuses can be configured to implement a function of the first apparatus or the second apparatus.

This application further provides a chip, including a processor, configured to: invoke instructions from a memory and run the instructions stored in the memory, so that a communication device on which the chip is installed performs the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples.

Optionally, the chip further includes the memory. The memory is configured to store a computer program or the code.

This application further provides a processor, configured to be coupled to a memory, and configured to perform a method and a function related to the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. An information transmission method, comprising:
obtaining at least two pieces of data, wherein each of the at least two pieces of data comprises scattering characteristic information obtained by sensing a target at a corresponding measurement angle; and
sending indication information, wherein the indication information indicates at least one of data that satisfies a coherent relation and data that satisfies a non-coherent relation in the at least two pieces of data, and the indication information is determined based on the scattering characteristic information comprised in each piece of data.

2. The method according to claim 1, wherein the indication information comprises at least one angle range, the at least one angle range comprises a first angle range, and data corresponding to measurement angles within the first angle range satisfies the coherent relation.

3. The method according to claim 2, wherein the at least one angle range further comprises a second angle range, and data corresponding to measurement angles within the second angle range satisfies the non-coherent relation.

4. The method according to claim 3, wherein the data corresponding to the first angle range and the data corresponding to the second angle range satisfy the non-coherent relation.

5. The method according to any one of claims 1 to 4, wherein the scattering characteristic information comprises at least one of the following:
a radar cross section, a scattering phase, and scattering intensity.

6. The method according to any one of claims 1 to 5, wherein
a portion of or all of the at least two pieces of data are source data obtained by sensing the target at corresponding measurement angles; or
a portion of or all of the at least two pieces of data are data obtained by processing source data that is obtained by sensing the target at corresponding measurement angles.

7. The method according to any one of claims 1 to 6, wherein the at least one angle range is associated with the target.

8. The method according to any one of claims 1 to 7, wherein the indication information further comprises identification information of the target.

9. The method according to any one of claims 1 to 8, wherein that the indication information is determined based on the scattering characteristic information comprised in each piece of data comprises:
the indication information is determined based on a derivative, with respect to the measurement angle, of the radar cross section comprised in each piece of data; or
the indication information is determined based on a statistical characteristic, with respect to the measurement angle, of the radar cross section comprised in each piece of data; or
the indication information is determined based on a derivative, with respect to the measurement angle, of the scattering phase comprised in each piece of data; or
the indication information is determined based on a statistical characteristic, with respect to the measurement angle, of the scattering phase comprised in each piece of data; or
the indication information is determined based on a derivative, with respect to the measurement angle, of the scattering intensity comprised in each piece of data; or
the indication information is determined based on a statistical characteristic, with respect to the measurement angle, of the scattering intensity comprised in each piece of data.

10. An information transmission method, comprising:
receiving indication information, wherein the indication information indicates at least one of data that satisfies a coherent relation and data that satisfies a non-coherent relation in at least two pieces of data, each of the at least two pieces of data comprises scattering characteristic information obtained by sensing a target at a corresponding measurement angle, and the indication information is determined based on the scattering characteristic information comprised in each piece of data; and
processing the at least two pieces of data based on the indication information.

11. The method according to claim 10, wherein the indication information comprises at least one angle range, the at least one angle range comprises a first angle range, and data corresponding to measurement angles within the first angle range satisfies the coherent relation.

12. The method according to claim 11, wherein the at least one angle range further comprises a second angle range, and data corresponding to measurement angles within the second angle range satisfies the non-coherent relation.

13. The method according to claim 12, wherein the data corresponding to the first angle range and the data corresponding to the second angle range satisfy the non-coherent relation.

14. The method according to any one of claims 10 to 13, wherein the scattering characteristic information comprises at least one of the following:
a radar cross section, a scattering phase, and scattering intensity.

15. The method according to any one of claims 10 to 14, wherein
a portion of or all of the at least two pieces of data are source data obtained by sensing the target at corresponding measurement angles; or
a portion of or all of the at least two pieces of data are data obtained by processing source data that is obtained by sensing the target at corresponding measurement angles.

16. The method according to any one of claims 10 to 15, wherein the at least one angle range is associated with the target.

17. The method according to any one of claims 10 to 16, wherein the indication information further comprises identification information of the target.

18. The method according to any one of claims 10 to 17, wherein that the indication information is determined based on the scattering characteristic information comprised in each piece of data comprises:
the indication information is determined based on a derivative, with respect to the measurement angle, of the radar cross section comprised in each piece of data; or
the indication information is determined based on a statistical characteristic, with respect to the measurement angle, of the radar cross section comprised in each piece of data; or
the indication information is determined based on a derivative, with respect to the measurement angle, of the scattering phase comprised in each piece of data; or
the indication information is determined based on a statistical characteristic, with respect to the measurement angle, of the scattering phase comprised in each piece of data; or
the indication information is determined based on a derivative, with respect to the measurement angle, of the scattering intensity comprised in each piece of data; or
the indication information is determined based on a statistical characteristic, with respect to the measurement angle, of the scattering intensity comprised in each piece of data.

19. The method according to any one of claims 10 to 18, wherein the method further comprises:
sending at least one piece of data, wherein the at least one piece of data belongs to the at least two pieces of data.

20. A communication apparatus, comprising:
an interface unit, configured to obtain at least two pieces of data, wherein each of the at least two pieces of data comprises scattering characteristic information obtained by sensing a target at a corresponding measurement angle; and
the interface unit is further configured to send indication information, wherein the indication information indicates at least one of data that satisfies a coherent relation and data that satisfies a non-coherent relation in the at least two pieces of data, and the indication information is determined based on the scattering characteristic information comprised in each piece of data.

21. The communication apparatus according to claim 20, wherein the indication information comprises at least one angle range, the at least one angle range comprises a first angle range, and data corresponding to measurement angles within the first angle range satisfies the coherent relation.

22. The communication apparatus according to claim 21, wherein the at least one angle range further comprises a second angle range, and data corresponding to measurement angles within the second angle range satisfies the non-coherent relation.

23. The communication apparatus according to claim 22, wherein the data corresponding to the first angle range and the data corresponding to the second angle range satisfy the non-coherent relation.

24. The communication apparatus according to any one of claims 20 to 23, wherein the scattering characteristic information comprises at least one of the following:
a radar cross section, a scattering phase, and scattering intensity.

25. The communication apparatus according to any one of claims 20 to 24, wherein
a portion of or all of the at least two pieces of data are source data obtained by sensing the target at corresponding measurement angles; or
a portion of or all of the at least two pieces of data are data obtained by processing source data that is obtained by sensing the target at corresponding measurement angles.

26. The communication apparatus according to any one of claims 20 to 25, wherein the at least one angle range is associated with the target.

27. The communication apparatus according to any one of claims 20 to 26, wherein the indication information further comprises identification information of the target.

28. The communication apparatus according to any one of claims 20 to 27, wherein that the indication information is determined based on the scattering characteristic information comprised in each piece of data comprises:
the indication information is determined based on a derivative, with respect to the measurement angle, of the radar cross section comprised in each piece of data; or
the indication information is determined based on a statistical characteristic, with respect to the measurement angle, of the radar cross section comprised in each piece of data; or
the indication information is determined based on a derivative, with respect to the measurement angle, of the scattering phase comprised in each piece of data; or
the indication information is determined based on a statistical characteristic, with respect to the measurement angle, of the scattering phase comprised in each piece of data; or
the indication information is determined based on a derivative, with respect to the measurement angle, of the scattering intensity comprised in each piece of data; or
the indication information is determined based on a statistical characteristic, with respect to the measurement angle, of the scattering intensity comprised in each piece of data.

29. A communication apparatus, comprising:
an interface unit, configured to receive indication information, wherein the indication information indicates at least one of data that satisfies a coherent relation and data that satisfies a non-coherent relation in at least two pieces of data, each of the at least two pieces of data comprises scattering characteristic information obtained by sensing a target at a corresponding measurement angle, and the indication information is determined based on the scattering characteristic information comprised in each piece of data; and
a processing unit, configured to process the at least two pieces of data based on the indication information.

30. The communication apparatus according to claim 29, wherein the indication information comprises at least one angle range, the at least one angle range comprises a first angle range, and data corresponding to measurement angles within the first angle range satisfies the coherent relation.

31. The communication apparatus according to claim 30, wherein the at least one angle range further comprises a second angle range, and data corresponding to measurement angles within the second angle range satisfies the non-coherent relation.

32. The communication apparatus according to claim 31, wherein the data corresponding to the first angle range and the data corresponding to the second angle range satisfy the non-coherent relation.

33. The communication apparatus according to any one of claims 29 to 32, wherein the scattering characteristic information comprises at least one of the following:
a radar cross section, a scattering phase, and scattering intensity.

34. The communication apparatus according to any one of claims 29 to 33, wherein
a portion of or all of the at least two pieces of data are source data obtained by sensing the target at corresponding measurement angles; or
a portion of or all of the at least two pieces of data are data obtained by processing source data that is obtained by sensing the target at corresponding measurement angles.

35. The communication apparatus according to any one of claims 29 to 34, wherein the at least one angle range is associated with the target.

36. The communication apparatus according to any one of claims 29 to 35, wherein the indication information further comprises identification information of the target.

37. The communication apparatus according to any one of claims 29 to 36, wherein that the indication information is determined based on the scattering characteristic information comprised in each piece of data comprises:
the indication information is determined based on a derivative, with respect to the measurement angle, of the radar cross section comprised in each piece of data; or
the indication information is determined based on a statistical characteristic, with respect to the measurement angle, of the radar cross section comprised in each piece of data; or
the indication information is determined based on a derivative, with respect to the measurement angle, of the scattering phase comprised in each piece of data; or
the indication information is determined based on a statistical characteristic, with respect to the measurement angle, of the scattering phase comprised in each piece of data; or
the indication information is determined based on a derivative, with respect to the measurement angle, of the scattering intensity comprised in each piece of data; or
the indication information is determined based on a statistical characteristic, with respect to the measurement angle, of the scattering intensity comprised in each piece of data.

38. The communication apparatus according to any one of claims 29 to 37, wherein
the interface unit is further configured to send at least one piece of data, wherein the at least one piece of data belongs to the at least two pieces of data.

39. A communication apparatus, comprising modules configured to perform the method according to any one of claims 1 to 9 or claims 10 to 19.

40. A communication apparatus, comprising a processor, configured to execute computer instructions stored in a memory, so that the communication apparatus performs the method according to any one of claims 1 to 9, or performs the method according to any one of claims 10 to 19.

41. The communication apparatus according to claim 40, wherein the communication apparatus further comprises the memory.

42. The communication apparatus according to claim 40 or 41, wherein the communication apparatus further comprises a communication interface, the communication interface is coupled to the processor, and the communication interface is configured to input and/or output information.

43. A chip, wherein the chip is connected to a memory, and
the chip is configured to read and execute a software program stored in the memory, to perform the method according to any one of claims 1 to 9 or claims 10 to 19.

44. A communication system, comprising the communication apparatus according to claim 39.

45. A computer-readable storage medium, wherein the computer-readable storage medium stores computer instructions, and
when the computer instructions are run on a computer,
the method according to any one of claims 1 to 9 is performed, or
the method according to any one of claims 10 to 19 is performed.

46. A computer program product, wherein the computer program product comprises computer program code, and
when the computer program code is run on a computer,
the method according to any one of claims 1 to 9 is performed, or
the method according to any one of claims 10 to 19 is performed.
